# DEMANDE DE BREVET EUROPEEN

(11) **EP 4 361 204 A1**
(43) Date de publication de la demande: **01.05.2024**
(21) Numéro de dépôt: 23198253.9
(22) Date de dépôt: 19.09.2023
(51) Int. Cl.: C08J 5/18, C08K 5/00, C08L 23/08, C08L 23/12

(54) **FILM TRANSPARENT, PERMÉABLE AUX GAZ ET IMPERMÉABLE À L'EAU, EN PARTICULIER POUR DES APPLICATIONS DANS LE DOMAINE MÉDICAL**

(30) Priorité: 31.10.2022 FR 2211348
(71) Demandeur: ADHEX TECHNOLOGIES, 21300 Chenôve (FR); Université Claude Bernard Lyon 1, 69622 Villeurbanne (FR); Centre National de la Recherche Scientifique, 75016 Paris (FR); Université Jean Monnet Saint-Étienne, 42100 Saint-Étienne (FR); Institut National des Sciences Appliquées de Lyon, 69100 Villeurbanne (FR)
(72) Inventeur: SEXTON, Alexane, 69100 VILLEURBANNE (FR); WILLIAMS, Maud, 21000 DIJON (FR); JEVIC, Julie, 21110 FAUVERNEY (FR); ESPUCHE, Eliane, 69100 VILLEURBANNE (FR); GOUANVE, Fabrice, 69110 SAINTE-FOY-LES-LYON (FR)
(74) Mandataire: Gevers & Orès

(57) **Abrégé**

- Film transparent, perméable aux gaz et imperméable à l'eau, en particulier pour des applications dans le domaine médical.
- Le film (1) comprend une base polyoléfine (3), à laquelle est ajouté un plastifiant monomérique (4) avec un pourcentage de masse compris entre 10% et 50% et de préférence également des tamis moléculaires (5) avec un pourcentage de masse inférieur ou égal à 20%, cet ajout permettant notamment d'augmenter la perméabilité aux gaz du film (1), ledit film (1) présentant ainsi une perméabilité élevée aux gaz, ainsi qu'une perméabilité faible à l'eau et une transparence élevée, de même que diverses caractéristiques et propriétés mécaniques de sorte qu'il est particulièrement bien approprié à de nombreuses applications, en particulier dans le secteur médical et notamment pour être appliqué sur une carte d'identification utilisée dans le diagnostic médical.

## Description

### DOMAINE TECHNIQUE

La présente invention concerne un film transparent, perméable aux gaz et imperméable à l'eau, en particulier pour des applications dans le domaine médical.

### ÉTAT DE LA TECHNIQUE

Bien que non exclusivement, le film transparent, perméable aux gaz et imperméable à l'eau est appliqué, plus particulièrement, à une carte d'identification utilisée dans un test d'identification mis en oeuvre, lors de diagnostics médicaux, pour identifier des bactéries.

On sait que, dans le domaine du diagnostic médical, le corps médical s'appuie souvent sur les résultats de tests d'identification bactérienne et d'antibiogrammes, pour déterminer le traitement antibiotique le plus adapté à la pathologie d'un patient ainsi que pour suivre l'évolution de la résistance de ces bactéries aux antibiotiques. Ces tests d'identification permettent de déterminer, de façon rapide et fiable, l'agent pathogène responsable d'une infection.

Pour réaliser de tels tests d'identification, il est nécessaire d'utiliser des cartes d'identification. Les cartes d'identification qui sont jetables et unitaires permettent d'identifier, rapidement et précisément, de très nombreuses espèces de bactéries et levures cliniquement pertinentes. Chaque carte d'identification est pourvue de micro-puits contenant des substrats d'identification. Pour réaliser un test d'identification, la solution à analyser est injectée dans des canaux de la carte d'identification, puis l'ensemble est placé dans un incubateur. Les plaquettes sont ensuite analysées par différentes méthodes usuelles.

Afin de protéger le milieu de culture de toute pollution externe, chaque carte d'identification est sécurisée, en étant scellée sur ses deux faces par un film adhésif transparent.

Le film adhésif transparent, utilisé à cet effet, doit présenter des caractéristiques particulières strictes, et notamment :
- une perméabilité aux gaz (oxygène, dioxyde de carbone) suffisante pour permettre la croissance bactérienne et le diagnostic ;
- une perméabilité à l'eau faible pour limiter l'évaporation du milieu de culture ;
- une transparence élevée pour pouvoir réaliser des lectures à des longueurs d'onde définies ; et
- des caractéristiques mécaniques particulières pour pouvoir transformer les films sans les déformer.

Généralement, des films en polyméthylpentène (PMP) sont utilisés pour de telles applications. Ces films en polyméthylpentène présentent, toutefois, des valeurs données figées pour les caractéristiques précitées.

Aussi, il existe un intérêt et un besoin de pouvoir modifier les valeurs de ces caractéristiques du film afin de les adapter plus précisément à celles réellement requises pour les applications envisagées.

### EXPOSÉ DE L'INVENTION

La présente invention a pour objet de proposer un film transparent, perméable aux gaz et imperméable à l'eau, susceptible d'être utilisée notamment dans les applications précitées et de répondre à ce besoin.

Selon l'invention, ledit film comprend une base (matrice) polyoléfine, à laquelle est ajouté au moins un plastifiant monomérique avec un pourcentage de masse du plastifiant monomérique compris entre 10% et 50%, et de préférence compris entre 15% et 45%.

Dans un mode de réalisation préféré, ledit film comprend, de plus, des tamis moléculaires avec un pourcentage de masse inférieur ou égal à 20%, et de préférence inférieur ou égal à 10%.

Ainsi, grâce à l'invention, on obtient un film qui présente notamment, comme précisé ci-dessous, une perméabilité élevée aux gaz (oxygène, dioxyde de carbone), une perméabilité faible à l'eau (liquide) et une transparence élevée, ainsi que diverses caractéristiques et propriétés mécaniques. En fonction de la proportion des éléments (plastifiant monomérique, tamis moléculaire) ajoutés à la base polyoléfine, on peut modifier les propriétés du film et les adapter aux propriétés requises pour les applications envisagées.

Ce film est particulièrement bien adapté à une utilisation sur une carte d'identification telle que décrite ci-dessus. Toutefois, grâce à ses caractéristiques surprenantes et avantageuses, ledit film peut également être utilisé dans de nombreuses autres applications, en particulier dans le domaine médical mais non exclusivement.

Avantageusement, la matrice polyoléfine correspond à l'un des composants suivants : un homopolymère PP (en polypropylène) ou un copolymère bloc ou statistique PP/PE (polypropylène PP et polyéthylène PE).

En outre, de façon avantageuse, le plastifiant monomérique est du sebacate de dioctyle (DOS pour « dioctyl sebacate » en anglais).

Par ailleurs, avantageusement, les tamis moléculaires sont réalisés dans au moins l'un des matériaux suivants : des cyclodextrines (CD), des zéolithes, des silsesquioxanes oligomères polyédriques (POSS pour « polyhedral oligomeric silsesquioxane » en anglais), des réseaux métallo-organiques (MOF pour « metal organic frameworks » en anglais), des charpentes organiques covalentes (COF pour « covalent organic frameworks » en anglais).

En outre, dans un mode de réalisation particulier :
- le film présente une épaisseur comprise entre 25 µm et 100 µm ; et/ou
- il est pourvu sur au moins l'une de ses faces d'une couche d'adhésif de manière à pouvoir être collé facilement sur un support.

### BRÈVE DESCRIPTION DES FIGURES

D'autres avantages et caractéristiques ressortiront mieux de la description qui va suivre de plusieurs modes de réalisation, donnés à titre d'exemples non limitatifs, d'un film conforme à l'invention, en se référant notamment aux figures annexées. Sur ces figures, des références identiques désignent des éléments semblables.
La figure 1 est une vue schématique partielle, en coupe, d'un film transparent, perméable aux gaz et imperméable à l'eau, conforme à un premier mode de réalisation de l'invention.
La figure 2 est une vue schématique partielle, en coupe, d'un film transparent, perméable aux gaz et imperméable à l'eau, conforme à un second mode de réalisation préféré de l'invention.

### DESCRIPTION DÉTAILLÉE

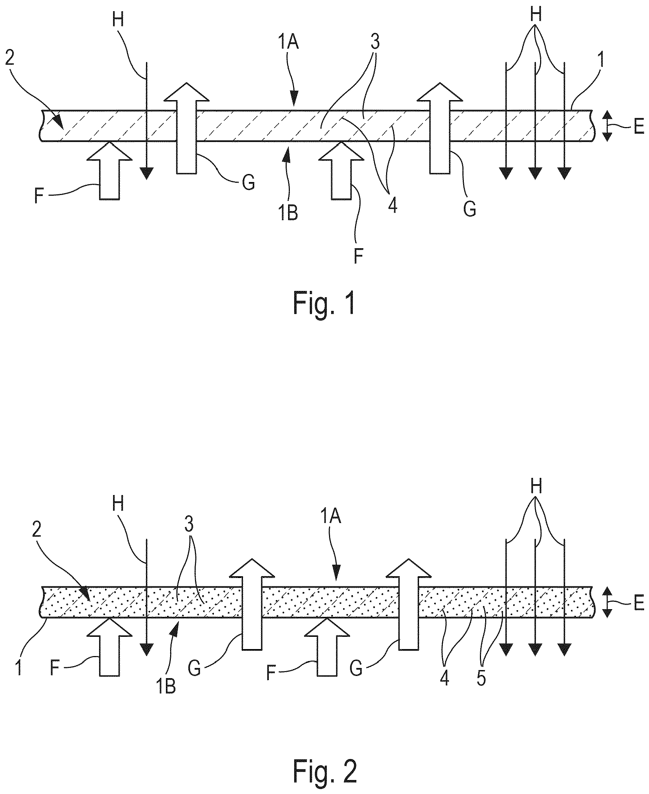

Le film 1 permettant d'illustrer l'invention et représenté selon deux modes de réalisation différents sur les figures 1 et 2 est un film transparent, perméable aux gaz et imperméable à l'eau, comme précisé ci-dessous.

Dans le premier mode de réalisation représenté sur la figure 1, le film 1 est formé d'un matériau 2 comprenant une base (matrice) polyoléfine 3, illustrée schématiquement par un fond blanc sur les figures 1 et 2, et un plastifiant monomérique 4, illustré schématiquement par des hachures en tirets, qui a été ajouté (mélangé) à la base polyoléfine 3. Le plastifiant monomérique 4 qui est réparti (mélangé), de préférence de façon uniforme, dans la base polyoléfine 3 présente un pourcentage de masse qui est compris entre 10% et 50%, et de préférence entre 15% et 45% de la masse totale du matériau 2 du film 1.

Par ailleurs, dans le second mode de réalisation (qui est le mode de réalisation préféré), le film 1 est formé également, comme représenté sur la figure 2, d'un matériau 2 comprenant une base (matrice) polyoléfine 3, à laquelle est ajouté un plastifiant monomérique 4. Le plastifiant monomérique 4 qui est réparti, de préférence de façon uniforme, dans la base polyoléfine 3 présente également un pourcentage de masse qui est compris entre 1 0% et 50%, et de préférence entre 15% et 45% de la masse totale du matériau 2 du film 1.

Dans ce second mode de réalisation (préféré), le matériau 2 du film 1 comprend, de plus, des tamis moléculaires 5, illustrés schématiquement par des points noirs sur la figure 2. Ces tamis moléculaires 5 précisés ci-dessous sont répartis, de préférence de façon uniforme, dans la base (matrice) polyoléfine 3 du matériau 2. Les tamis moléculaires 5 présentent un pourcentage de masse qui est inférieur ou égal à 20% et de préférence inférieur ou égal à 10% de la masse totale du matériau 2 du film 1.

L'ajout du plastifiant monomérique 4 et des tamis moléculaires 5 produit un effet surprenant, notamment en termes de perméabilité (élevée) aux gaz, permettant d'obtenir des caractéristiques avantageuses.

Comme précisé ci-dessous, le film 1 réalisé dans le matériau 2 présente les caractéristiques et avantages suivants :
- une transparence élevée, comme illustré sur les figures 1 et 2 par des flèches H traversant le film 1, avec une transmittance supérieure à 85% à 428 nm ;
- une perméabilité faible à l'eau (H₂O), inférieure à 1,66E-12 mol.m/(m².s.Pa) (ou inférieure à 5000 barrer), comme illustré sur les figures 1 et 2 par des flèches F stoppées par le film 1. Dans le cadre de la présente invention, une valeur notée « xEy » est égale à « *x*. 10*^{y}* » ;
- une perméabilité élevée au dioxyde de carbone (CO₂), supérieure à 1,66E-14 mol.m/(m².s.Pa) (ou supérieure à 50 barrer) ; et
- une perméabilité élevée à l'oxygène O₂, supérieure à 3,35E-15 mol.m/(m².s.Pa) (ou supérieure à 10 barrer).

Ces perméabilités élevées aux gaz sont illustrées sur les figures 1 et 2 par des flèches G traversant le film 1.

Le film 1 réalisé dans le matériau 2 présente également les caractéristiques suivantes :
- une déformation à la rupture comprise entre 30% et 500% ; et
- un module de Young supérieur à 5,00E+07 Pa (ou kg/(m.s2)).

Ces dernières caractéristiques rendent le film 1 souple et manipulable, et notamment suffisamment manipulable pour les applications envisagées.

Dans chacun des modes de formulation, la matrice polyoléfine 3 correspond à l'un des composants suivants :
- un homopolymère PP (polypropylène) ;
- un copolymère bloc ou statistique PP/PE (polypropylène PP et polyéthylène PE).

La matrice polyoléfine 3 (de départ) permet, notamment pour des épaisseurs E de film 1 comprises entre 25 et 100 µm, de répondre aux critères de transparence requis pour les applications envisagées et d'apporter une hydrophobie suffisante pour garantir des flux d'eau faibles (à l'état liquide).

De plus, la matrice polyoléfine 3 peut être facilement transformée par voie fondue. Un procédé par voie fondue est utilisé, de préférence, aussi bien pour les différentes étapes de formulation du matériau 2 que pour la mise en forme du film 1. Un tel procédé présente notamment l'avantage d'avoir un faible impact environnemental par rapport à un procédé en phase solvant et est économiquement intéressant d'un point de vue industriel. Aussi, de préférence, toutes les modifications apportées aux polymères utilisés sont réalisées par une voie fondue.

De plus, les additifs (le plastifiant monomérique 4 et les tamis moléculaires 5) incorporés dans la matrice polyoléfine 3 présentent des stabilités thermiques suffisantes pour les conditions de mise en oeuvre par voie fondue et permettent de conserver une faible perméabilité à l'eau.

Une matrice polyoléfine 3 telle qu'utilisée dans le cadre de la présente invention présente ainsi, notamment, les caractéristiques et avantages suivants :
- une transparence élevée ;
- une imperméabilité à l'eau ;
- des propriétés mécaniques : souple et non extensible ; et
- une aptitude à être mise en forme par voie fondue.

En outre, quel que soit le mode de réalisation considéré, le plastifiant monomérique 4 (comprenant des molécules organiques à faible masse molaire) qui est ajouté à la matrice polyoléfine 3 est, de préférence, du sebacate de dioctyle (DOS pour « dioctyl sebacate » en anglais).

L'ajout du plastifiant monomérique 4 à la matrice polyoléfine 3, sans dégrader les propriétés optiques de la matrice polyoléfine 3, permet d'augmenter sa perméabilité aux gaz grâce à la plastification des chaînes de polymère de la matrice polyoléfine 3.

Pour améliorer la perméabilité aux gaz de la matrice polyoléfine 3, on ajoute ainsi des molécules organiques de faible masse molaire, qui permettent, notamment, d'augmenter la mobilité des chaînes polymères. Une augmentation de la mobilité de ces dernières ou de manière plus générale du milieu de perméation conduit à une augmentation de la perméabilité.

Par ailleurs, dans ledit second mode de réalisation (préféré), les tamis moléculaires 5 qui sont ajoutés correspondent à au moins l'un des matériaux suivants :
- des cyclodextrines (CD) ;
- des zéolithes ;
- des silsesquioxanes oligomères polyédriques (POSS pour « polyhedral oligomeric silsesquioxane » en anglais) ;
- des réseaux métallo-organiques (MOF pour « metal organic frameworks » en anglais) ;
- des charpentes organiques covalentes (COF pour « covalent organic frameworks » en anglais).

En particulier, l'utilisation de tamis moléculaires et plus particulièrement de zéolithes (qui influencent peu les propriétés mécaniques à l'exception de la déformation à la rupture) est très avantageuse.

Dans le second mode de réalisation, la perméabilité aux gaz du film 1 est fortement augmentée grâce à l'ajout à la fois du plastifiant monomérique 4 et des tamis moléculaires 5, tout en conservant des propriétés mécaniques et optiques suffisantes pour les applications envisagées.

Dans une première variante de réalisation, les tamis moléculaires 5 sont tous réalisés dans un seul et même matériau, parmi les matériaux précités.

En outre, dans une seconde variante de réalisation, le matériau 2 comprend au moins deux types différents de tamis moléculaires 5, dont un premier type est réalisé dans un premier matériau (parmi les matériaux précités) et dont un second type est réalisé dans un second matériau (parmi les matériaux précités) différent dudit premier matériau.

Dans le cadre de la présente invention, les tamis moléculaires 5 présentent un pourcentage de masse qui est compris entre 0% (premier mode de réalisation) et 20%, et de préférence entre 0% et 10%, de la masse totale du matériau 2 du film 1.

Le tableau ci-dessous permet de mettre en évidence les caractéristiques principales du film 1 pour quatre formulations F1, F2, F3 et F4 différentes du matériau 2.

| Formulation | Module élastique *(MPa)* | Contrainte élastique *(MPa)* | Contrainte à la rupture *(MPa)* | Déformation élastique (%) | Déformation à la rupture (%) | Perméabilité O₂ *(SI)* | Perméabilité CO₂ *(SI)* | Perméabilité H₂O liquide *(SI)* | Transmittanc e à 428 nm *(%)* |
|---|---|---|---|---|---|---|---|---|---|
| F1 | 146 | 12 | 12 | 32 | 271 | 4,45E-15 | 1,74E-14 | 7,76E-13 | 90 |
| F2 | 73 | 12 | 12 | 30 | 260 | 8,63E-15 | 2,26^{E}-14 | 8,88E-13 | 88 |
| F3 | 186 | 32 | 16 | 27 | 256 | 3,52E-15 | 1,809E-14 | 1,07E-12 | 89 |
| F4 | 179 | 10 | 13 | 30 | 286 | 4,32E-15 | 2.881E-14 | 6,56E-13 | 90 |

Ce tableau présente les valeurs d'au moins certains des paramètres considérés pour les différentes formulations F1, F2, F3 et F4.

Dans ce tableau, les formulations F1 et F2 sont relatives au premier mode de réalisation (figure 1) comprenant un mélange de base polyoléfine 3 et de plastifiant monomérique 4, et les formulations F3 et F4 sont relatives au second mode de réalisation (figure 2) comprenant un mélange de base polyoléfine 3, de plastifiant monomérique 4 et de tamis moléculaires 5. De plus, dans ce cas :
- la base polyoléfine 3 est un copolymère PP/PE de MFI 1 à 8 ;
- le plastifiant monomérique 4 est du DOS ; et
- les tamis moléculaires 5 sont soit de la zéolithe NaY, soit de la zéolithe NaX.

Plus précisément :
- F1 concerne un mélange de copolymère PP/PE et de 25% de DOS ;
- F2 concerne un mélange de copolymère PP/PE et de 35% de DOS ;
- F3 concerne un mélange de copolymère PP/PE, de 18% de DOS et de 6% de NaY ; et
- F4 concerne un mélange de copolymère PP/PE, de 21% de DOS et de 8% de NaX.

Ce tableau permet de mettre en évidence les caractéristiques avantageuses suivantes des différentes formulations :
- la perméabilité élevée aux gaz (oxygène O₂, dioxyde de carbone CO₂), exprimée dans le Système International SI, à savoir en mol.m/(m².s.Pa) ;
- la perméabilité faible à l'eau H₂0 à l'état liquide, exprimée également en mol.m/(m².s.Pa) ;
- la transparence élevée, à savoir une transmittance pour une longueur d'onde de 428 nm, exprimée en pourcentage ; et
- des caractéristiques mécaniques particulières, à savoir le module élastique, la contrainte élastique et la contrainte à la rupture exprimés en MPa, ainsi que la déformation élastique et la déformation à la rupture exprimées en %.

Les quatre formulations F1 à F4 présentent ainsi, toutes, de bonnes propriétés de perméabilité aux gaz. De plus, les formulations F3 et F4 présentent des propriétés mécaniques améliorées.

On présente, ci-après, un exemple de procédé de fabrication d'un film 1 tel que celui décrit ci-dessus.

Lors de la mise en oeuvre de ce procédé de fabrication, on réalise, tout d'abord, une fusion de la matrice polyoléfine 3.

Puis, on ajoute les composants correspondant au mode de réalisation concerné, à la matrice polyoléfine 3 fondue, et on mélange l'ensemble dans un mélangeur usuel.

Ainsi, pour fabriquer le matériau 2 selon le premier mode de réalisation, on ajoute le plastifiant monomérique 4 à la matrice polyoléfine 3, et on mélange l'ensemble.

En outre, pour fabriquer le matériau 2 selon le second mode de réalisation, on ajoute à la fois le plastifiant monomérique 4 et les tamis moléculaires 5 à la matrice polyoléfine 3, et on mélange l'ensemble.

Dans ce cas, le plastifiant monomérique 4 et les tamis moléculaires 5 peuvent être ajoutés simultanément à la matrice polyoléfine 3. Le plastifiant monomérique 4 et les tamis moléculaires 5 peuvent également être ajoutés successivement à la matrice polyoléfine 3 en commençant par le plastifiant monomérique 4 ou par les tamis moléculaires 5 en fonction du mode de fabrication envisagé.

Les différentes étapes (fusion, mélange) du procédé de fabrication sont mises en oeuvre de façon usuelle.

Lorsque le mélange est homogène, le matériau 2 obtenu est transformé et mis en forme de façon usuelle, à l'état fondu, par exemple à l'aide d'une opération d'extrusion, pour obtenir le film 1 présentant les caractéristiques recherchées, notamment en termes d'épaisseur.

A titre d'illustration, pour une utilisation sur une carte d'identification, l'épaisseur E (figures 1 et 2) du film 1 peut être comprise entre 25 µm et 100 µm.

Comme indiqué ci-dessus, un tel procédé de fabrication par voie fondue (pour la fabrication du matériau 2 et la mise en forme du film 1) présente notamment l'avantage d'avoir un impact environnemental faible par rapport à un procédé en phase solvant et est économiquement intéressant d'un point de vue industriel.

Dans un mode de réalisation particulier, on applique, de façon usuelle, sur au moins l'une des faces 1A et 1B du film 1 une couche adhésive (non représentée). Le film 1 adhésif ainsi obtenu peut alors être collé facilement sur un support de l'application envisagée.

Le film 1, tel que décrit ci-dessus, est particulièrement bien adapté à une utilisation sur une carte d'identification, grâce à ses caractéristiques suivantes :
- une perméabilité aux gaz (oxygène, dioxyde de carbone) qui est suffisante pour permettre la croissance bactérienne et le diagnostic ;
- une perméabilité à l'eau (liquide) qui est suffisamment faible pour permettre de limiter l'évaporation du milieu de culture ;
- une transparence qui est suffisamment élevée pour permettre de réaliser des lectures à des longueurs d'onde définies ; et
- des caractéristiques mécaniques qui permettent de transformer le film sans le déformer.

Le film 1, tel que décrit ci-dessus, peut également être utilisé dans de nombreuses autres applications, en particulier (mais non exclusivement) dans le secteur médical et notamment dans le domaine du diagnostic. Plus généralement, le film 1 peut être utilisé dans toutes les applications dans lesquelles ses caractéristiques avantageuses, et notamment sa perméabilité élevée aux gaz (permettant des échanges gazeux tout en présentant des propriétés de barrière à l'eau), sont recherchées.

Il est bien évident que les exemples présentés ci-dessus ne sont que des illustrations particulières, en aucun cas limitatives quant aux domaines d'application de la présente invention. De plus, des caractéristiques de certains de ces exemples différents peuvent être combinées entre elles si cela est approprié, sans sortir du cadre de la présente invention.

## Revendications

1. Film transparent, imperméable à l'eau et perméable aux gaz,
**caractérisé en ce qu'**il comprend un matériau (2) comportant une base polyoléfine (3), à laquelle est ajouté au moins un plastifiant monomérique (4) avec un pourcentage de masse du plastifiant monomérique (4) compris entre 10% et 50% de la masse totale du matériau (2) du film (1), **en ce que** la base polyoléfine (3) correspond à l'un des composants suivants : un homopolymère PP ou un copolymère bloc ou statistique PP/PE, et **en ce que** le film (1) présente une transmittance supérieure à 85% à 428 nm.

2. Film selon la revendication 1,
**caractérisé en ce que** le pourcentage de masse du plastifiant monomérique (4) est compris entre 15% et 45% de la masse totale du matériau (2) du film (1).

3. Film selon l'une des revendications 1 et 2,
**caractérisé en ce que** le matériau (2) du film (1) comporte, de plus, des tamis moléculaires (5) avec un pourcentage de masse inférieur ou égal à 20% de la masse totale dudit matériau (2).

4. Film selon la revendication 3,
**caractérisé en ce que** le pourcentage de masse des tamis moléculaires (5) est inférieur ou égal à 10% de la masse totale du matériau (2) du film (1).

5. Film selon l'une quelconque des revendications précédentes,
**caractérisé en ce que** le plastifiant monomérique (4) est du sebacate de dioctyle.

6. Film selon l'une quelconque des revendications 3 à 5,
**caractérisé en ce que** les tamis moléculaires (5) sont réalisés dans au moins l'un des matériaux suivants : des cyclodextrines, des zéolithes, des silsesquioxanes oligomères polyédriques, des réseaux métallo-organiques, des charpentes organiques covalentes.

7. Film selon l'une quelconque des revendications précédentes,
**caractérisé en ce qu'**il présente une épaisseur (E) comprise entre 25 µm et 100 µm.

8. Film selon l'une quelconque des revendications précédentes,
**caractérisé en ce qu'**il est pourvu sur au moins l'une de ses faces (1A, 1B) d'une couche d'adhésif.
